# EUROPEAN PATENT APPLICATION

(11) **EP 4 203 254 A1**
(43) Date of publication of application: **28.06.2023**
(21) Application number: 21217544.2
(22) Date of filing: 23.12.2021
(51) Int. Cl.: H02K 3/18, H02K 3/52, H02K 15/095, H02K 1/24, H02K 15/12

(54) **ELECTROMAGNETIC POLE FOR A ROTARY ELECTRIC MACHINE AND ROTOR AND ROTARY ELECTRIC MACHINE COMPRISING SUCH AN ELECTROMAGNETIC POLE**

(71) Applicant: Valeo eAutomotive Germany GmbH, 91056 Erlangen (DE)
(72) Inventor: Böhm, Andreas, 9761 Bad Neustadt a.d.Saale (DE)
(74) Representative: Valeo Powertrain Systems

(57) **Abstract**

The invention relates to an electromagnetic pole (17) for a rotary electric machine (1) with an axis of rotation (A) comprising:
- a tooth (18) comprising a tooth core (19) comprising a magnetic material, in particular a laminated tooth core comprising a plurality of steel plates stacked in the direction of the axis of rotation (A),
- a coil (16) comprising a wire (20) wound around the tooth core (19), the coil comprising at least one outer layer (21) of the wire and one under layer (22) of the wire,
first portions (23) of the wire of the outer layer (21) being secured with second portions (24) of the wire of the under layer (22) thanks to an adhesive material (25) covering at least partially one of the first portions (23) of the wire.

The invention also relates to a rotor (3) comprising such electromagnetic poles (17) and an electric machine (1) comprising such a rotor (3) and a method for producing such an electromagnetic pole.

## Description

The present invention relates to an electromagnetic pole for a rotary electric machine. The present invention also relates to a rotor comprising such electromagnetic poles and a rotary electric machine comprising such a rotor. The present invention also relates to methods for producing such an electromagnetic pole, such a rotor and such an electric machine.

In a known manner, an electromagnetic pole for rotor a rotary electric machine with an axis of rotation comprises:
- a tooth comprising a tooth core comprising a magnetic material, in particular a laminated tooth core comprising a plurality of steel plates stacked in the direction of the axis of rotation(A),
- a coil comprising a wire wound around the tooth core,
- a resin matrix molded on the coil.

Thanks to the resin matrix, all the turns of the coil are secured together. However, voids between the turns are formed during the winding process. These voids are filled with the resin. These voids are lost spaces. The number of turns wound around the tooth is therefore reduced and the performance of the electric machine is reduced. Moreover, the differences between the void sizes of the different magnetic poles create an unbalance of the rotor.

The objective of the invention is to reduce or eliminate these disadvantages.

The present invention relates to an electromagnetic pole for a rotary electric machine with an axis of rotation comprising:
- a tooth comprising a tooth core comprising a magnetic material, in particular a laminated tooth core comprising a plurality of steel plates stacked in the direction of the axis of rotation,
- a coil comprising a wire wound around the tooth core, the coil comprising at least one outer layer of the wire and one under layer of the wire,

the outer layer of the wire comprising first portions of the wire being at the outermost part of the coil relative to the tooth core,
the under layer of the wire comprising second portions of the wire adjacent to the first portions of the wire, each second portion of the wire adjacent to one of the first portions of the wire being closer to the tooth core than the said one of the first portion of the wire,
wherein at least one of the first portions and/or at least one of the second portions adjacent to the said at least one first portion being covered at least partially with an adhesive material so that the said at least one first portion and the at least one of the second portions adjacent to the said at least one first portion are secured together.

Thanks to such a securing with an adhesive material, the voids between the outer layer of the wire and the under layer of the wire are reduced. The number of turns wound around the tooth can be therefore increased to increase the performance of the rotary electric machine and/or the size of the rotary electric machine can be reduced thanks to smaller coils. Moreover such a securing prevents the turns of the outer layer from slipping. Therefore less empty space is needed between adjacent coils. The performance of the machine can be further increased and/or the size of the rotary electric machine can be reduced.

According to a further development of the present invention, the adhesive material is a UV-curable adhesive.

UV curable adhesives are cured thanks to a UV illumination. Such a UV illumination can be focused on the area of the adhesive material to cure. The manufacturing of the electromagnetic pole is therefore easier.

According to a further development of the present invention, the adhesive material is a double-sided adhesive tape.

The use of such an adhesive material allow instant securing of the first portion and the second portion.

According to a further development of the present invention, the electromagnetic pole comprises other layers of the wire distinct from the outer layer of the wire and the under layer of the wire, at least two adjacent layers of the wire of the under layer of the wire and the other layers of the wire being secured together in pairs with the adhesive material.

Securing more layers of the wire further reduces the voids between the layers. The number of turns wound around the tooth can be therefore increased to increase the performance of the rotary electric machine and/or the size of the rotary electric machine can be reduced thanks to smaller coils.

The invention also relates to a rotor for a rotary electric machine comprising at least two electromagnetic poles as were described before and a rotor core. According to a further development of the present invention, the tooth core of each electromagnetic pole is integral with the rotor core.

The invention also relates to a rotary electric machine comprising a rotor as was described before.

The invention also relates to a method for producing an electromagnetic pole comprising the following steps:
- providing a tooth, the tooth comprising a tooth core comprising a magnetic material, in particular a laminated tooth core comprising a plurality of stacked steel plates,
- providing a wire,
- a first application step wherein a first adhesive component is applied on a first portions of the wire,
- after the first application step, a winding step wherein the wire is wound in different layers around the tooth so that the first adhesive component is between each first portions of the wire and a second portion of the wire of an adjacent layer. According to a further development of the present invention, the method for producing an electromagnetic pole comprises a second application step wherein a second adhesive component is applied on the second portions of the wire, the second application step preceding the winding step.

According to a further development of the present invention, the first adhesive component and the second adhesive component are adhesive components of a two-component adhesive, in particular a two-component epoxy glue.

According to a further development of the present invention, the first adhesive component or the second adhesive component is a glue and the other of the first adhesive component and the second adhesive component is an activator. According to a further development of the present invention, the method for producing an electromagnetic pole comprises a heating step wherein the first adhesive component is heated after the first portion of the wire is wound on the second portion of the wire during the winding step.

According to a further development of the present invention, the first adhesive component being a UV-curable adhesive, the method comprises a UV illumination step after the first portion of the wire is wound on the second portion of the wire during the winding step.

According to a further development of the present invention, the winding step includes guiding the wire with a needle.

The invention also relates to a method for producing a rotor for a rotary electric machine, the rotor comprising a plurality of electromagnetic poles produced with the method for producing an electromagnetic pole as was described before.

The invention will be better understood by reading the following description and examining the figures which accompany it. These figures are provided purely by way of illustration and in no way limit the invention:
Figure 1 is a schematic view in transverse cross-section of the rotary electrical machine according to the invention; and
Figure 2 shows a partial schematic cross-section view of a rotor according to a first embodiment of the invention; and
Figure 3 shows a partial schematic cross-section view of a rotor according to a second embodiment of the invention; and
Figure 4 shows a partial schematic view of the manufacturing of an electromagnetic pole according to the invention; and
Figure 5 shows a partial schematic view of a variant of the manufacturing of an electromagnetic pole according to the invention.

The elements which are identical, similar or analogous retain the same reference from one figure to another. The ordinal numbers are used to differentiate features. They do not define a position of a feature. As a consequence, for example, a third feature of a product does not mean that the product has a first and/or a second feature. The words "axial", "axially" relates to the direction of the axis of rotation A of the rotary electric machine.

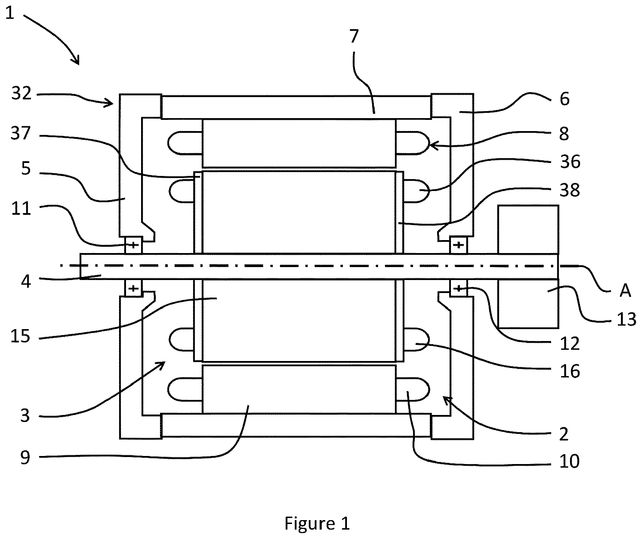

Figure 1 shows a half section through a schematically depicted rotary electrical machine 1. The rotary electrical machine 1 comprises a shaft 4 with a rotor 3 sitting thereon. The shaft 4 is for example mounted by means of a first bearing 11 and second bearing 12 so as to be rotatable about an axis of rotation A relative to a stator 2. The stator 2 comprises a stator core 9 and a stator winding 8. For example, the stator core 9 is a laminated stator core 9 comprising several stator plates. The stator core 9 comprises radially oriented stator teeth. Slots are formed between the teeth. The stator winding 8 comprises conductors. The conductors are arranged in the slots. Stator winding ends 10 are electrically connecting the conductors to form the stator winding 8. For instance, the stator winding 8 is a U-Pin type stator winding or a multi-lobed stator winding. For example, the stator winding is three-phase alternating current stator winding or a double three-phase alternating current stator winding.

For example, the first bearing 11 sits in a first bracket 5, and the second bearing 12 sits in a second bracket 6. The first bearing 11 and the second bearing 12 are for instance ball bearings, roller bearings or plain bearings. In the embodiment of figure 1, the rotary electric machine includes a housing 32. The housing 32 comprises the first bracket 5, the second bracket 6 and a housing part 7. The housing part 7 connects the first bracket 5 and the second bracket 6. For example, the stator core 9 is press fitted in the housing part 7 in particular, the housing part 7 comprises a cylindrical inner surface in which an outer cylindrical surface of the stator core 9 in press fitted. In another embodiment not shown, the first bracket or the second bracket comprises a first tubular portion in which the stator core is press fitted. The other bracket can comprise a second tubular portion. A cooling chamber can be formed between the first tubular portion and the second tubular portion. In another embodiment not shown, a cooling chamber is formed in the housing part.

The shaft 4 can be rotationally linked to a driving member 13 such as a pulley or a gear wheel.

The rotor 3 is rotationally connected to the shaft 4.

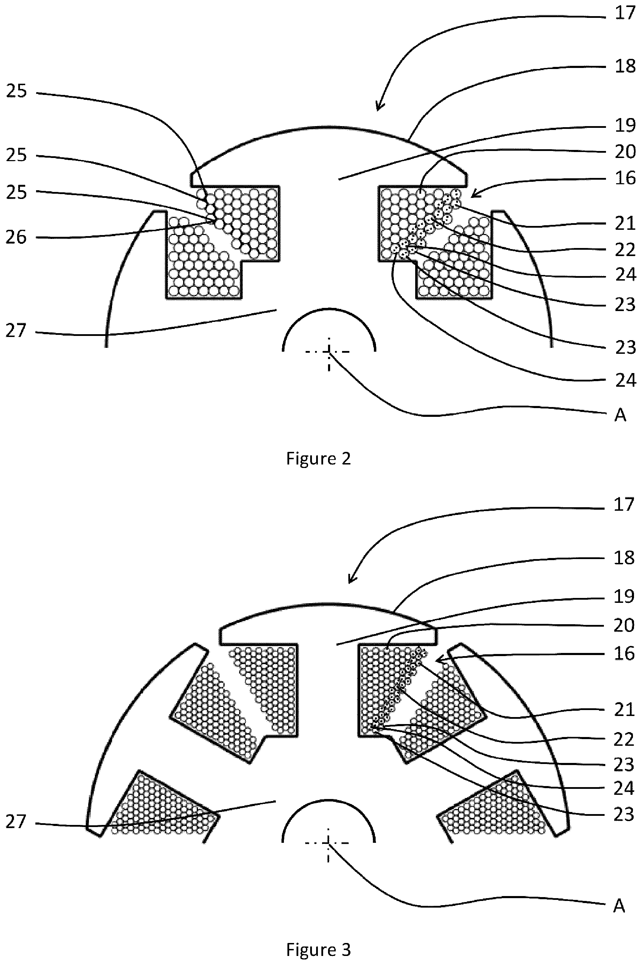

Figure 2 shows a schematic partial section view perpendicular to the axis of rotation A of a rotor 3 according to a first embodiment of the invention. The rotor 3 is, in particular, a separately excited rotor, also commonly referred as a wound rotor or a slip ring rotor. In this type of rotor, the rotor comprises coils 16 connected to an external power supply through slip rings (not shown). The slip rings correspond to electro-mechanical devices configured to allow the exchange of electric power between a rotating element and a fixed element, here respectively the windings 16 and the external power supply.

The rotor 3 comprises a plurality of electromagnetic poles 17. Each electromagnetic pole comprises a tooth 18 and one coil 16. The tooth 18 comprises a tooth core 19. For example the tooth core 19 is a laminated tooth core comprising a plurality of steel plates stacked in the direction of the axis of rotation A. The coil 16 comprises a wire 20 wound around the tooth core 19. The coil 16 comprises at least one outer layer 21 of the wire and one under layer 22 of the wire. Each coil 16 comprises for example a plurality of turns. In figure 2 and figure 3, the turns corresponding to the outer layer 21 are joint by a dotted line and the turns corresponding to the under layer 22 are joint by another dotted line.

The outer layer 21 of the wire comprises first portions 23 of the wire which are at the outermost part of the coil 16 relative to the tooth core.

The under layer 22 of the wire comprises second portions 24 of the wire adjacent to the first portions 23 of the wire. Each second portion 24 of the wire adjacent to one of the first portions 23 of the wire is closer to the tooth core 19 than the said one of the first portion 23 of the wire.

At least one of the first portions 23 and/or at least one of the second portions 24 adjacent to the said at least one first portion 23 is covered at least partially with an adhesive material 25 so that the said at least one first portion 23 and the at least one of the second portions 24 adjacent to the said at least one first portion 23 are secured together.

The adhesive material 25 may also secure together two adjacent turns of the outer layer 21 of the wire at intra-layer securing zones 26. Such intra-layer securing zones 26 may also exist between two adjacent turns of the under layer 22 of the wire.

For example, the coil 16 comprises other layers of the wire distinct from the outer layer 21 of the wire and the under layer 22 of the wire. At least two adjacent layers of wires of the under layer 22 of the wire and the other layers of the wire are secured together in pairs with the adhesive material 25.

The rotor 3 comprises a rotor body 15. The rotor body 15 comprises a rotor core 27 and the plurality of the teeth 18 of the electromagnetic poles. For example the teeth 18 are projecting radially. The plurality of teeth 18 may comprise an even number of teeth 18. The plurality of teeth 18 may notably comprise four, six, or eight teeth. In the first embodiment of figure 2, the rotor body comprises four teeth 18.

For example the rotor core is a laminated rotor core comprising a plurality of steel plates stacked in the direction of the axis of rotation A.

In the embodiments shown in the figures, the tooth core 19 of each electromagnetic pole 17 is integral with the rotor core 27. The rotor body 15 is for example a stack of laminations configured to be mounted coaxially on the shaft 4. For example, the rotor body 15 is press-fitted on the shaft 4. The press-fitting of the rotor body 15 on the shaft 4 relies on having an outer circumference of the shaft 4 slightly higher than an inner circumference of the rotor body 15, before proceeding with the press-fitting.

In another embodiment not shown, the rotor core and the tooth cores are distinct. For example the tooth cores are secured on the rotor core thanks to a dovetail joint.

The coils 16 especially forms coil ends 36 projecting axially from respectively two axial ends of the rotor body 15. The rotor 3 may further comprise two end plates 37, 38, configured to come against the two axial ends of the rotor body 15, such that to provide a mechanical holding of the stack of laminations. The two end plates 37, 38 are especially located between the rotor body 15 and the coil ends 36.

The adhesive material 25 is for example a UV-curable adhesive.

In another example the adhesive material 25 is a double-sided adhesive tape. Other example of adhesive materials 25 will be described thereafter.

Figure 3 shows a second embodiment of the invention. The second embodiment of the invention is similar with the first embodiment of the invention but the number of electromagnetic poles 17 is six.

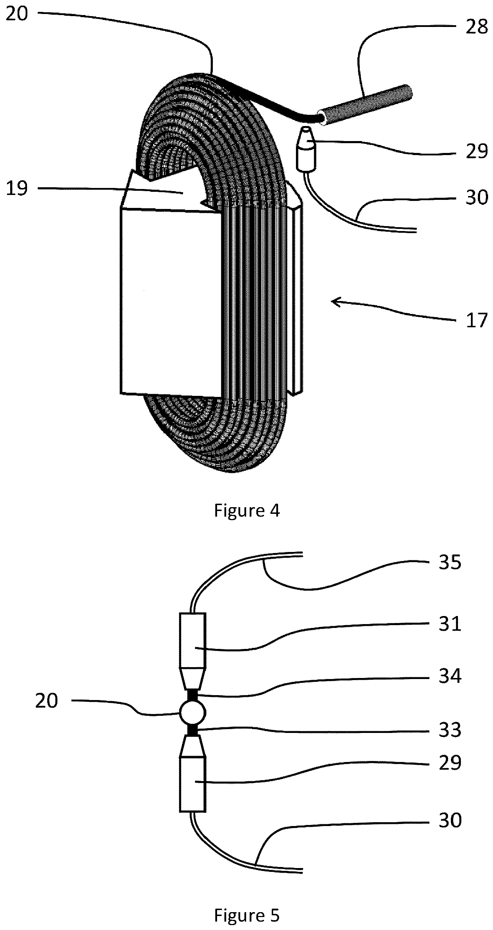

Figure 4 shows a partial schematic view of the manufacturing of the electromagnetic pole 17.

A method for producing the electromagnetic pole 17 comprises the following steps:
- providing a tooth 18, the tooth 18 comprising a tooth core 19 comprising a magnetic material, in particular a laminated tooth core comprising a plurality of stacked steel plates,
- providing a wire 20,
- a first application step wherein a first adhesive component 33 is applied on a first portions 23 of the wire,
- after the first application step, a winding step wherein the wire is wound in different layers around the tooth so that the first adhesive component 33 is between each first portions of the wire and a second portion 24 of the wire of an adjacent layer.

The first adhesive component 33 is for example applied on the first portions 23 of the wire thanks to a first nozzle 29. The first nozzle 29 is fed with the first adhesive component 33 by a first feeder 30. The first feeder 30 comprises for example a tube, a pump and a control device. Such a first nozzle 29 and a first feeder 30 is particularly suitable for liquid first adhesive component 33 such as a UV-curable adhesive and other liquid adhesive materials.

If the first adhesive component 33 is a UV-curable adhesive, the method comprises for example a UV illumination step after the first portion 23 of the wire is wound on the second portion 24 of the wire during the winding step.

In another embodiment not shown, the first adhesive component 33 is applied on the first portions 23 of the wire thanks to a dispenser. Such a dispenser is particularly suitable for first adhesive components 33 such as double-sided tape.

In these embodiments, the first adhesive components is the adhesive material 25. The method comprises for example a second application step wherein a second adhesive component 34 is applied on the second portions 24 of the wire. The second application step precedes the winding step.

The second adhesive component 34 is for example applied on the second portions 24 of the wire thanks to a second nozzle 31 as shown in figure 5. The second nozzle 31 is fed with the second adhesive component 34 by a second feeder 35. The second feeder 35 comprises for example a tube, a pump and a control device. The first adhesive component 33 and the second adhesive component 34 are for example adhesive components of a two-component adhesive, in particular a two-component epoxy glue.

In another example, the first adhesive component 33 or the second adhesive component 34 is a glue and the other of the first adhesive component 33 and the second adhesive component 34 is an activator. For example the glue is a cyanoacrylate glue and the activator is an acetone-based activator.

The method comprises for example a heating step wherein the first adhesive component is heated after the first portion 23 of the wire is wound on the second portion 24 of the wire during the winding step.

The wire 20 is for example wound around the tooth thanks to a needle 28. The needle 28 is for instance an hollow needle through which the wire 20 is guided. For example, the needle is moved around the tooth to position the wire 20 on the tooth. The needle 28 has a wire outlet through which the wire 20 exits the needle 28. The first application step and if any the second application step are made for example on the wire after the wire exits from the wire outlet.

The embodiments of electromagnetic poles 17 shown in the figures relates to a rotor of a rotary electric machine wherein the stator 2 is radially outside the rotor 3. In another embodiment not shown the electromagnetic pole is an electromagnetic pole of a rotor of a rotary electric machine wherein the stator is radially inside the rotor.

In another embodiment not shown, the electromagnetic pole is an electromagnetic pole of a stator of a rotary electric machine. In this case, the coil is a coil of the stator winding. For example the polarity of the pole is changing depending on the polarity of an alternating current powering the coil.

### Part list

- 1: rotary electrical machine
- 2: stator
- 3: rotor
- 4: shaft
- 5: first bracket
- 6: second bracket
- 7: housing part
- 8: stator winding
- 9: stator core
- 10: stator winding end
- 11: first bearing
- 12: second bearing
- 13: driving member
- 15: rotor body
- 16: coil
- 17: electromagnetic pole
- 18: tooth
- 19: tooth core
- 20: wire
- 21: outer layer
- 22: under layer
- 23: first portion
- 24: second portion
- 25: adhesive material
- 26: intra-layer securing zones
- 27: rotor core
- 28: needle
- 29: first nozzle
- 30: first feeder
- 31: second nozzle
- 32: housing
- 33: first adhesive component
- 34: second adhesive component
- 35: second feeder
- 36: coil end

## Claims

1. Electromagnetic pole (17) for a rotary electric machine (1) with an axis of rotation (A) comprising:
- a tooth (18) comprising a tooth core (19) comprising a magnetic material, in particular a laminated tooth core comprising a plurality of steel plates stacked in the direction of the axis of rotation (A),
- a coil (16) comprising a wire (20) wound around the tooth core (19), the coil comprising at least one outer layer (21) of the wire and one under layer (22) of the wire,
the outer layer (21) of the wire comprising first portions (23) of the wire being at the outermost part of the coil (16) relative to the tooth core,
the under layer (22) of the wire comprising second portions (24) of the wire adjacent to the first portions (23) of the wire, each second portion (24) of the wire adjacent to one of the first portions (23) of the wire being closer to the tooth core (19) than the said one of the first portion (23) of the wire,
wherein at least one of the first portions (23) and/or at least one of the second portions (24) adjacent to the said at least one first portion (23) being covered at least partially with an adhesive material (25) so that the said at least one first portion (23) and the at least one of the second portions (24) adjacent to the said at least one first portion (23) are secured together.

2. Electromagnetic pole (17) according to the preceding claim wherein the adhesive material (25) is a UV-curable adhesive.

3. Electromagnetic pole (17) according to claim 1 wherein the adhesive material (25) is a double-sided adhesive tape.

4. Electromagnetic pole (17) according to one of the preceding claims comprising other layers of the wire distinct from the outer layer (21) of the wire and the under layer (22) of the wire, at least two adjacent layers of wires of the under layer (22) of the wire and the other layers of the wire being secured together in pairs with the adhesive material (25).

5. Rotor (3) for a rotary electric machine comprising at least two electromagnetic poles (17) according to one of the preceding claims and a rotor core (27).

6. Rotor (3) for a rotary electric machine according to the preceding claim wherein the tooth core (19) of each electromagnetic pole (17) is integral with the rotor core (27).

7. Rotary electric machine (1) comprising a rotor (3) according to one of claim 5 and claim 6.

8. Method for producing an electromagnetic pole (17) comprising the following steps:
- providing a tooth (18), the tooth (18) comprising a tooth core (19) comprising a magnetic material, in particular a laminated tooth core comprising a plurality of stacked steel plates,
- providing a wire (20),
- a first application step wherein a first adhesive component (33) is applied on a first portions (23) of the wire,
- after the first application step, a winding step wherein the wire is wound in different layers around the tooth so that the first adhesive component (33) is between each first portions of the wire and a second portion (24) of the wire of an adjacent layer.

9. Method for producing an electromagnetic pole (17) according to the preceding claim comprising a second application step wherein a second adhesive component (34) is applied on the second portions (24) of the wire, the second application step preceding the winding step.

10. Method for producing an electromagnetic pole (17) according to the preceding claim wherein the first adhesive component (33) and the second adhesive component (34) being adhesive components of a two-component adhesive, in particular a two-component epoxy glue.

11. Method for producing an electromagnetic pole (17) according to claim 9 wherein the first adhesive component (33) or the second adhesive component (34) is a glue and the other of the first adhesive component (33) and the second adhesive component (34) is an activator.

12. Method for producing an electromagnetic pole (17) according to one of claims 8 to 11 comprising a heating step wherein the first adhesive component is heated after the first portion (23) of the wire is wound on the second portion (24) of the wire during the winding step.

13. Method for producing an electromagnetic pole (17) according to claim 8 wherein the first adhesive component (33) is a UV-curable adhesive, the method comprising a UV illumination step after the first portion (23) of the wire is wound on the second portion (24) of the wire during the winding step.

14. Method for producing an electromagnetic pole (17) according to one of claims 8 to 13 wherein the winding step includes guiding the wire with a needle (28).

15. Method for producing a rotor (3) for a rotary electric machine (1), the rotor comprising a plurality of electromagnetic poles (17) produced with the method for producing an electromagnetic pole according to one of claims 8 to 14.
